# DEMANDE DE BREVET EUROPEEN

(11) **EP 2 506 372 A2**
(43) Date de publication de la demande: **03.10.2012**
(21) Numéro de dépôt: 09305522.6
(22) Date de dépôt: 09.06.2009
(51) Int. Cl.: H02B 1/20

(54) **Dispositif de distribution de l'alimentation électrique à des appareils par exemple modulaires disposés en rangées sur des rails parallèles**

(30) Priorité: 10.06.2008 FR 0853844
(60) Demande divisionnaire: 12000195.3
(71) Demandeur: Hager-Electro SAS, 67210 Obernai (FR)
(72) Inventeur: Berrouba, Kamel, 67530, OTTROTT (FR); Bechet, Guillaume, 67210 Obernai (FR); Blaes, Gérard, 67520, MARLENHEIM (FR)
(74) Mandataire: Littolff, Denis

(57) **Abrégé**

Dispositif de distribution de l'alimentation électrique à des appareils par exemple modulaires disposés en rangées sur des rails parallèles, et comportant au moins une barre conductrice placée dans une enveloppe isolante (1) s'étendant en regard d'au moins un rail, ladite barre étant munie d'excroissances conductrices (2, 2') prévues pour se connecter du bas vers le haut dans des borniers de connexion d'au moins un appareil d'au moins une rangée.

Ce dispositif comporte des moyens d'accrochage (4) sur les appareils à raccorder lorsque les excroissances conductrices (2, 2') de la ou des barres sont en position de serrage dans les borniers de connexion.

## Description

La présente invention concerne un dispositif de distribution de l'alimentation électrique à des appareils par exemple modulaires disposés en rangées sur des rails parallèles. Un tel agencement se trouve par exemple dans des armoires de distribution électriques, en général dotées de plusieurs rails horizontaux superposés sur lesquels les appareils sont alignés en rangées parallèles situées à des différents niveaux.

Sur chaque rangée, un appareil dit de tête, par exemple un disjoncteur ou un interrupteur différentiel, constitue le point de départ de l'alimentation électrique des autres appareils de la même rangée.

L'alimentation d'un appareil de tête de chaque rangée s'effectue de manière classique via des câbles à forte section raccordés, à leur autre extrémité, par exemple à des bornes de répartition des différents pôles. Chaque rangée est alors connectée de manière individuelle.

Pour ce qui concerne le raccordement des différents appareils situés sur une même rangée, il est classique de recourir à des barres ou peignes de pontage, comportant une longrine conductrice entourée d'un isolant et munie à intervalle régulier de dents sinsérant dans les dispositifs de raccordement des appareils. La connexion dans une direction horizontale s'effectue alors non plus de manière individuelle mais regroupée.

En reprenant l'idée d'un raccordement collectif à l'aide d'équivalents à ces peignes de pontage permettant une connexion d'allure verticale, il a été proposé des systèmes de distribution alimentant plusieurs rails. Ainsi, le document FR 2 847 732 divulgue un dispositif de distribution d'énergie à des appareils disposés sur des rangées parallèles, ledit dispositif se présentant comme une sorte de barre de pontage verticale.

Dans les deux directions cardinales, l'opération de connexion ne pose aucun problème lorsque le raccordement se fait par le haut, comme c'est par exemple le cas pour le dispositif divulgué dans le brevet FR-2 847 732. Dans cette hypothèse, il suffit d'insérer les dents ou lamelles de raccordement dans les orifices des dispositifs de connexion des appareils avant de procéder à leur serrage. Le montage, qui soit horizontal ou vertical, est facilité par le fait que les dispositifs reposent par gravité sur les boîtiers des appareils avant le serrage.

Dans l'hypothèse d'une alimentation par le bas, la manipulation conduisant à la fixation des barres est sensiblement plus compliquée. Le peigne de pontage ou la barre d'allure verticale de distribution de l'ngergie ne peut en effet plus reposer naturellement et par gravité sur les boîtiers au moment de l'insertion des dents de connexion, l'installateur devant au contraire les maintenir insérés en même temps qui procède à leur serrage successif dans les dispositifs de connexion des boîtiers des appareils électriques à raccorder. Or, dans tous les pays procédant à l'alimentation des appareils par le bas, les installateurs sont demandeurs d'un système qui leur facilite la tâche, et qui leur permette notamment de se concentrer sur l'opération de connexion/serrage.

L'objet de la présente invention est de proposer une solution à ce problème, sous la forme d'un dispositif de distribution d'alimentation électrique qui puisse à la fois être utilisé en mode horizontal, à la manière d'un peigne de pontage, ou en mode vertical à la manière d'un dispositif de distribution d'énergie sur plusieurs rails parallèles, et dont l'utilisation pour la connexion par le bas soit aussi simple et immédiate que lors de la connexion par le haut des dispositifs connus.

A cet effet, ce dispositif comprend classiquement au moins une barre conductrice placée dans une enveloppe isolante s'étendant en regard d'au moins un rail, ladite barre étant munie d'excroissances conductrices prévues pour se connecter du bas vers le haut dans des borniers de connexion d'au moins un appareil d'au moins une rangée. Ce dispositif se caractérise à titre principal en ce qui comporte des moyens d'accrochage sur les appareils à raccorder lorsque les excroissances conductrices de la ou des barres sont en position de serrage dans les borniers de connexion.

Ces moyens d'accrochage permettent de réaliser la connexion en deux étapes, une première étape réalisant le positionnement stable du dispositif de l'invention avec les excroissances conductrices correctement positionnées dans les borniers de connexion des appareils, suivie d'une seconde étape de serrage des borniers.

De préférence, le dispositif de distribution de l'invention comporte de plus des moyens de guidage des excroissances conductrices vers les borniers de connexion par coulissement sur les boîtiers des appareils.

Ces moyens de guidage interviennent, chronologiquement, avant les moyens d'accrochage puisqu'ils permettent de s'assurer du positionnement desdites excroissances relativement aux borniers de connexion avant accrochage.

Dans une configuration d'allure verticale, c'est-à-dire pour un dispositif de distribution orienté perpendiculairement à plusieurs rangées superposées d'appareils, et selon une possibilité, c'est l'enveloppe isolante de la ou des barre(s) verticale(s) qui comporte lesdits moyens d'accrochage.

Dans cette hypothèse, le dispositif de distribution de l'invention est tel que la ou les barre(s) isolée(s) s'étend(ent) sensiblement perpendiculairement à l'une des extrémités des rails superposés, chaque barre étant munie de prolongements latéraux isolés s'orientant dans un plan transversal en direction des rails, lesdits prolongements étant dotés d'au moins une dent de connexion conductrice non isolée par barre s'étendant dans la direction de l'axe de la barre, prévue pour se connecter dans un bornier de connexion de l'appareil proximal de chaque rangée.

Les moyens d'accrochage consistent par exemple en une pluralité de protubérances ou d'épaulements dépassant à intervalle régulier de l'enveloppe de la ou des barres, positionnées sur ladite enveloppe de manière à prendre appui sur les boîtiers d'au moins deux des appareils fixés à l'extrémité des rangées.

Le point d'appui en position accrochée existe en fait en un nombre au plus égal au nombre de rangées d'appareils électriques.

Selon une configuration possible, chaque protubérance ou épaulement est disposé dans le prolongement d'une surface de l'enveloppe assurant le guidage par coulissement de ladite enveloppe sur les boîtiers alignés des appareils, en vue de maintenir au cours du coulissement un positionnement correct des dents dans l'axe des borniers de connexion des appareils à raccorder.

Ces surfaces liées à l'enveloppe constituent donc le moyen de guidage précité. Selon une possibilité, l'enveloppe de la ou des barres conductrices comporte en outre des reliefs de préhension comportant des nervures anti-glissement.

Dans l'hypothèse où l'enveloppe isolante comporte plusieurs barres isolées les unes des autres correspondant à au moins un pôle ou au neutre de l'alimentation électrique, les prolongements latéraux isolés comportent des bras décalés et de longueurs différentes pour que les dents de connexion puissent être positionnées en face des borniers de connexion correspondants des boîtiers.

De préférence, ces enveloppes isolantes comportent au surplus au voisinage des dents des surfaces sécables obstruant au moins partiellement les orifices des boîtiers donnant accès aux borniers de connexion des câbles d'alimentation.

Cette caractéristique vise à satisfaire aux normes de sécurité concernant l'isolation par rapport aux personnes.

L'invention va à présent être décrite plus en détail, en référence aux figures annexées, pour lesquelles :
- la figure 1 représente, en vue perspective, un dispositif de distribution selon l'invention;
- la figure 2 représente une vue perspective suivant une orientation différente du même dispositif ;
- la figure 3 représente un agrandissement de la partie comportant les moyens d'accrochage et les moyens de guidage ; et
- la figure 4 est un agrandissement des prolongements latéraux s'orientant dans un plan transversal.

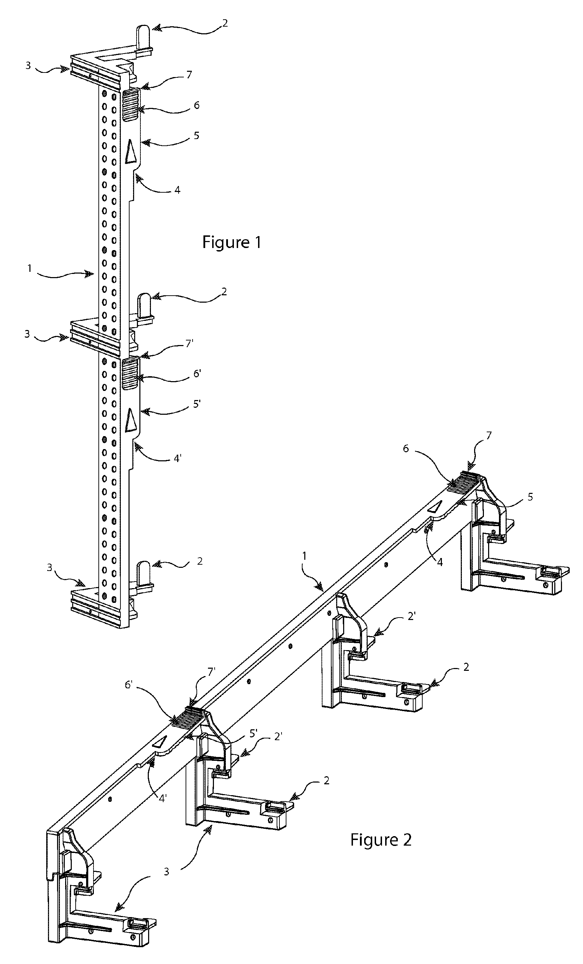

En référence aux figures 1 et 2, une enveloppe isolante (1), par exemple en matière plastique, entoure au moins une barre conductrice permettant de distribuer au moins une phase et/ou le neutre des appareils modulaires pour se fixer sur au moins une rangée.

En l'occurrence, la connexion à ces appareils s'effectue au moyen d'excroissances conductrices (2, 2) dépassant de prolongements latéraux (3). L'orientation des excroissances conductrices (2, 2) montre que le dispositif représenté permet l'alimentation électrique de plusieurs rails parallèles. Ces excroissances conductrices (2, 2) sont alors prévues pour être raccordées à des appareils de tête, par exemple des interrupteurs différentiels, en l'occurrence bipolaires.

L'intervalle entre deux rails normalisés est constant et égal à 125 mm, et le pas qui sépare deux prolongements latéraux (3) consécutifs est également de cette longueur.

L'alimentation électrique du dispositif de distribution de l'invention s'éffectue par exemple en réalisant une jonction via un câble électrique souple au niveau des borniers de raccordement de l'interrupteur différentiel de la rangée supérieure ou inférieure. Les prolongements latéraux (3) autorisent une telle connexion, comme on le verra plus en détail dans la suite.

Les excroissances conductrices (2, 2) sont décalées pour correspondre au décalage des borniers de connexion dans les appareils modulaires.

Il est à noter que l'enveloppe isolante (1), qui comprend une isolation intérieure permettant de séparer les barres de phase et de neutre, se prolonge au niveau des prolongements latéraux, car il ne doit subsister aucun risque de contact électrique.

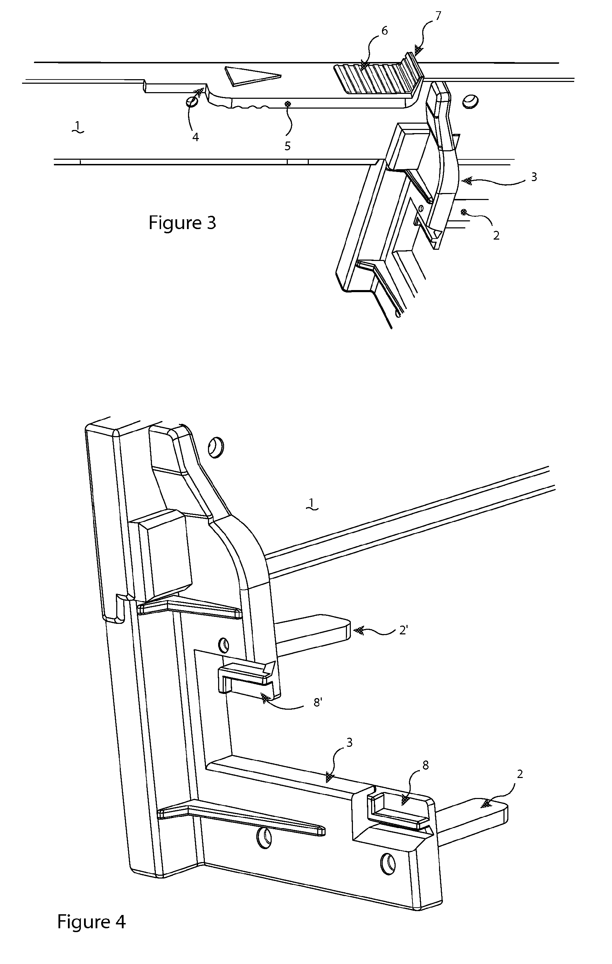

Les moyens d'accrochage propres à l'invention apparaissent plus nettement en figure 3.

Il s'agit d'épaulements (4) dépassant latéralement de l'enveloppe (1) et qui peuvent prendre appui sur une surface horizontale du boîtier des interrupteurs différentiels placés en bout des rangées. Pour que le dispositif fonctionne, il faut au moins deux points d'appui, c'est-à-dire un accrochage sur deux boîtiers différents. C'est la raison pour laquelle les configurations des figures 1 et 2, qui permettent respectivement la connexion entre trois et quatre rangées horizontales d'appareils, ne comportent que deux épaulements (4, 4). Lorsque ces derniers sont en appui sur deux boîtiers, le dispositif de l'invention est accroché de telle sorte que les languettes ou excroissances conductrices (2, 2) sont insérées dans les borniers de raccordement des appareils, prêtes pour le serrage.

Ces épaulements (4, 4) sont situés dans le prolongement de surfaces (5, 5) assurant un coulissement de l'ensemble du dispositif le long de surfaces des boîtiers d'entrées perpendiculairement aux surfaces d'accrochage tout en guidant les excroissances (2, 2) dans les borniers de connexion, en position d'avant serrage.

Lorsque le coulissement des surfaces (5, 5) est en cours, les excroissances (2, 2) sont placées dans l'axe des borniers de connexion des appareils à raccorder, en l'espèce les interrupteurs différentiels de tête.

Des reliefs de préhension (6, 6) terminés par une butée (7, 7) permettent de manipuler le produit de manière plus aisée, notamment pendant la phase de coulissement contre les boîtiers.

Les prolongements latéraux (3) comportent, au voisinage des excroissances conductrices (2, 2), des surfaces sécables (8, 8) prévues pour obstruer au moins partiellement les orifices des boîtiers donnant accès aux borniers de connexion des câbles d'alimentation.

Dans l'hypothèse où aucun câble ne doit être raccordé dans lesdits borniers de connexion, les surfaces sécables (8, 8) ne sont pas enlevées. La connexion des excroissances reste alors parfaitement isolée par rapport à l'extérieur.

Si cela est nécessaire, notamment pour réaliser l'alimentation du dispositif de distribution de l'invention, au niveau du rail supérieur ou du rail inférieur, des conducteurs d'alimentation venant des bornes de répartition sont raccordés dans les borniers de connexion au contact des excroissances (2, 2). Les surfaces sécables (8, 8) sont alors coupées de manière à pouvoir laisser le passage à ces conducteurs d'alimentation.

L'example illustré par les figures n'est bien entendu pas exhaustif de l'invention, qui englobe également des variantes de formes, par exemple pour les prolongements latéraux (3), les dispositifs de préhension (6, 7), etc.

Par ailleurs, le dispositif de distribution de l'alimentation électrique représenté dans les figures est prévu pour des appareils bipolaires. II est bien entendu possible d'élargir l'invention à d'autres configurations multipolaires.

## Revendications

1. Dispositif de distribution de l'alimentation électrique à des appareils par exemple modulaires disposés en rangées sur des rails parallèles, et comportant au moins une barre conductrice placée dans une enveloppe isolante (1) s'étendant en regard d'au moins un rail, ladite barre étant munie d'excroissances conductrices (2, 2') prévues pour se connecter du bas vers le haut dans des borniers de connexion d'au moins un appareil d'au moins une rangée, **caractérisé en ce qu'**il comporte des moyens d'accrochage (4) sur les appareils à raccorder lorsque les excroissances conductrices (2, 2') de la ou des barres sont en position de serrage dans les borniers de connexion.

2. Dispositif de distribution électrique selon la revendication précédente, **caractérisé en ce qu'**il comporte des moyens de guidage (5, 5') des excroissances conductrices (2, 2') vers les borniers de connexion par coulissement sur les boîtiers des appareils.

3. Dispositif de distribution électrique selon la revendication précédente, **caractérisé en ce que** l'enveloppe isolante (1) de la ou des barre(s) verticale(s) comporte lesdits moyens d'accrochage (4).

4. Dispositif de distribution électrique selon la revendication précédente, **caractérisé en ce que** la ou les barre(s) isolée(s) s'étend(ent) sensiblement perpendiculairement à l'une des extrémités des rails superposés, chaque barre étant munie de prolongements latéraux (3) isolés s'orientant dans un plan transversal en direction des rails, lesdits prolongements (3) étant dotés d'au moins une dent de connexion (2, 2') conductrice non isolée par barre s'étendant dans la direction de l'axe de la barre, prévue pour se connecter dans un bornier de connexion de l'appareil proximal de chaque rangée.

5. Dispositif de distribution électrique selon la revendication précédente, **caractérisé en ce que** les moyens d'accrochage consistent en une pluralité de protubérances ou d'épaulements (4) dépassant à intervalle régulier de l'enveloppe (1) de la ou des barres, positionnés sur ladite enveloppe (1) de manière à prendre appui sur les boîtiers d'au moins deux appareils fixés à l'extrémité des rangées.

6. Dispositif de distribution électrique selon la revendication précédente, **caractérisé en ce que** chaque protubérance ou épaulement (4) est disposé dans le prolongement d'une surface (5, 5') de l'enveloppe (1) assurant le guidage par coulissement de ladite enveloppe (1) sur les boîtiers alignés des appareils, en vue de maintenir au cours du coulissement un positionnement correct des dents (2, 2') dans l'axe des borniers de connexion des appareils à raccorder.

7. Dispositif de distribution électrique selon l'une quelconque des revendications précédentes, **caractérisé en ce que** l'enveloppe (1) de la ou des barres conductrices comporte des reliefs de préhension (6, 6') comportant des nervures anti-glissement.

8. Dispositif de distribution électrique selon l'une des revendications 2 à 4, **caractérisé en ce que** l'enveloppe isolante (1) comporte plusieurs barres isolées les unes des autres correspondant à au moins un pôle ou au neutre de l'alimentation électrique, les prolongements latéraux (3) isolés comportant des bras décalés et de longueurs différentes pour que les dents de connexion (2, 2') puissent être positionnées en face des borniers de connexion correspondants des boîtiers.

9. Dispositif de distribution électrique selon la revendication précédente, **caractérisé en ce que** les enveloppes isolantes (1) comportent au voisinage des dents (2, 2') des surfaces sécables (8, 8') obstruant au moins partiellement les orifices des boîtiers donnant accès aux borniers de connexion des câbles d'alimentation.
